# EUROPÄISCHE PATENTSCHRIFT

(11) **EP 2 212 360 B1**
(45) Veröffentlichungstag und Bekanntmachung des Hinweises auf die Patenterteilung: **03.07.2013**
(21) Anmeldenummer: 08852647.0
(22) Anmeldetag: 18.11.2008
(51) Int. Cl.: C08F 236/10, C08F 212/08, C08F 2/22

(54) **VERFAHREN ZUR HERSTELLUNG VON EMULSIONSPOLYMERISATION**
METHOD FOR PRODUCING EMULSION POLYMERS
PROCÉDÉ DE FABRICATION DE POLYMÈRES EN ÉMULSION

(30) Priorität: 21.11.2007 EP 07121177
(43) Veröffentlichungstag der Anmeldung: 04.08.2010
(73) Patentinhaber: BASF SE, 67056 Ludwigshafen (DE)
(72) Erfinder: SCHROEDER, Marc, Canton Mi 48188 (US); ROSCHMANN, Konrad, 67069 Ludwigshafen-edigheim (DE); RENZ, Hans, 67149 Meckenheim (DE)
(86) Internationale Anmeldenummer: PCT/EP2008/065712
(87) Internationale Veröffentlichungsnummer: WO 2009/065809

(56) Entgegenhaltungen:
- EP-A- 1 316 567
- EP-A1- 0 047 380
- WO-A-2007/125027
- BE-A1- 792 548
- US-A- 3 941 912
- US-A- 4 613 650

## Beschreibung

Die vorliegende Erfindung betrifft neue Emulsionspolymerisate, Verfahren zu deren Herstellung und deren Verwendung in Beschichtungsmassen zur Verbesserung der Wasserbeständigkeit.

Die Durchführung radikalisch initiierte Emulsionspolymerisationen von ethylenisch ungesättigten Monomeren in einem wässrigen Medium ist vielfach vorbeschrieben und dem Fachmann daher hinreichend bekannt. Radikalisch induzierte wässrige Emulsionspolymerisationsreaktionen erfolgen üblicherweise dergestalt, dass man die ethylenisch ungesättigten Monomere unter Mitverwendung von Dispergierhilfsmitteln, im wässrigen Medium in Form von Monomerentröpfchen dispers verteilt und mittels eines radikalischen Polymerisationsinitiators polymerisiert. Von dieser Verfahrensweise unterscheidet sich das vorliegende Verfahren insbesondere durch die spezifische Zuführung von Monomere.

BE 792548 offenbart die Verwendung von Emulsionspolymeren, in denen Acrylamid in einer bestimmten Zugabeweise zugegeben wird, zur Beschichtung von Papier und Textil. Die Zugabereihenfolge von Acrylamid hat keinen Einfluß auf die Wasserstabilität des so beschichteten Papiers.

US 4613650 offenbart die Verwendung von Emulsionspolymeren, in denen Acrylamid in einer bestimmten Zugabeweise zugegeben wird, zur Beschichtung von Papier und Auslegewaren. Durch den Einsatz derartiger Polymere wird die Bedruckbarkeit auf Papier verbessert.

US 3941912 beschreibt die Verwendung von Emulsionspolymeren zur Beschichtung von Papier.

EP 1316567 A1 beschreibt die Verwendung von Emulsionspolymeren zur Beschichtung von Beton, Gips, Preßholz, Sperrholz, Hartfasern, Holz, Zementmörtel, Mauerwerk oder Zement.

EP 47380 A1 offenbart Styrol-Butadien-(Meth)acrylamid-Emulsionscopolymere mit bestimmter Zusammensetzung und deren Verwendung als Bindemittel für Korrosionsschutzfarben. EP 47380 A1 enthält keine Aussage über den Einfluß der Zugabeweise auf diese Eignung.

Aus WO 2006/136575 ist bekannt, Emulsionspolymerisate für Haftklebstoffe herzustellen, die carbonsäuregruppenhaltige Monomere einpolymerisert enthalten, zu deren Herstellung die carbonsäuregruppenhaltige Monomere schneller zudosiert werden als die übrigen Monomere. Durch dieses Herstellungsverfahren werden Haftklebstoffe erhalten, die eine verbesserte Adhäsion zeigen.

Aus der internationalen Anmeldung WO 2007/125027 ist es bekannt, Verbindungen, die wenigstens zwei ethylenisch ungesättigte Gruppen enthalten, langsamer dem Reaktionsgemisch zuzudosieren als die übrigen Monomere. Die so erhältlichen Polymerisate zeigen eine verringerte Koagulatbildung.

Polymerdispersionen sind in wässrigem Medium dispergierte Polymerpartikel. Zur Stabilisierung des kolloidalen Zustands tragen die Polymerpartikel hydrophile Gruppen aus hydrophilen Monomere oder Emulgatoren auf der Oberfläche. Das führt dazu, dass aus Polymerdispersionen erhaltene Polymerfilme zu einem gewissen Grad hydrophile Eigenschaften zeigen. Für die Anwendung in Beschichtungsmassen, insbesondere für den Schutz von metallischen Oberflächen gegen Korrosion, soll jedoch der Polymerfilm die Barriere gegenüber Wasser erhöhen. Die Polymerfilme sollten daher eine geringe Hydrophilie bzw. möglichst hohe Hydrophobie aufweisen. Besonders sind dafür StyrolButadien-Copolymerisate geeignet, die im allgemeinen eine recht hohe Hydrophobie zeigen.

Aufgabe der vorliegenden Erfindung war es, die Hydrophobie von Emulsionspolymerisaten für den Korrosionsschutz zu erhöhen.

Die Aufgabe wurde gelöst durch ein Verfahren zum Schutz von metallischen Substraten gegen Korrosion, umfassend die Schritte
I) Herstellen eines Polymeren durch Emulsionspolymerisation, enthaltend als Aufbaukomponenten in einpolymerisierter Form
   (A) mindestens eine vinylaromatische Verbindung,
   (B) mindestens eine Verbindung mit zwei konjugierten ethylenisch ungesättigten Doppelbindungen,
   (C) mindestens eine ethylenisch ungesättigte Verbindung ausgewählt aus der Gruppe bestehend aus Verbindungen mit mindestens einer Amidfunktion und Hydroxyalkyl(meth)acrylaten,
   (D) optional mindestens eine andere Verbindung als die Verbindungen (A) und (C) mit einer ethylenisch ungesättigten Doppelbindung, und
   (E) optional mindestens eine andere Verbindung als Verbindungen (B) mit mindestens zwei ethylenisch ungesättigten Doppelbindungen,
   wobei zumindest ein Teil der Monomere während der Polymerisation über einen gewissen Zeitraum (Dosierungszeitraum) dem Reaktionsgemisch zudosiert werden,
   und wobei in der ersten Hälfte des Dosierungszeitraums dem Reaktionsgemisch weniger als die Hälfte der Gesamtmenge des Monomers (C) zudosiert wird,
II) optional Vermischen des so erhaltenen Polymers mit mindestens einem Hilfsmittel ausgewählt aus der Gruppe bestehend aus Verlaufsmitteln, Verdickern, Entschäumern, Füllstoffen, Pigmenten, Dispergierhilfsmitteln für Pigmente, Korrosionsinhibatoren und aktiven Korrisionsschutzpigmenten,
III) Aufbringen der Beschichtungsmasse auf das metallische Substrat und
IV) Trocknen der Beschichtung bei einer Temperatur von Umgebungstemperatur bis 100 °C über einen Zeitraum von wenigern Minuten bis mehreren Tagen.

Die nach dem erfindungsgemäßen Verfahren erhältlichen Emulsionspolymere zeigen eine erhöhte Hydrophobie, was sich beispielsweise an einer verringerten Wasseraufnahme zeigt. Dabei sind die erhaltenen Polymerdispersionen jedoch ausreichend stabil. Als Maß dafür kann gelten, das sich bei den erfindungsgemäßen Polymerdispersionen während der Lagerung ein geringer Anteil an Koagulat bildet als bei Polymerdispersionen gleicher Zusammensetzung, die durch eine konventionelle Dosierung des Monomers (C) erhalten worden sind.

Bei dem Monomer (A) handelt es sich um mindestens eine, beispielsweise ein bis drei, bevorzugt ein bis zwei besonders bevorzugt genau eine vinylaromatische Verbindung. Damit sind solche Verbindungen bezeichnet, die genau eine ethylenisch ungesättigte Doppelbindung und ein aromatisches Ringsystem enthalten. Bevorzugt sind ethylenisch ungesättigte Doppelbindung und aromatisches Ringsystem konjugiert.

Beispiele dafür sind Styrol, α-Methylstyrol, o-Chlorstyrol, 2-, 3- oder 4-Vinyltoluol, bevorzugt sind Styrol und α-Methylstyrol und besonders bevorzugt ist Styrol.

Bei den Monomeren (B) handelt es sich um mindestens eine, beispielsweise ein bis drei, bevorzugt ein bis zwei besonders bevorzugt genau eine Verbindung, die zwei ethylenisch ungesättigten Doppelbindungen, die miteinander konjugiert sind, enthalten, bevorzugt ausschließlich genau ein konjugiertes Paar von ethylenisch ungesättigten Doppelbindungen.

Beispiele dafür sind bevorzugt 4 bis 8 Kohlenstoffatome aufweisende konjugierte Diene, wie 1,3-Butadien, 1,3-Pentadien, Isopren, Chloropren, Cyclopentadien und Cyclohexadien, bevorzugt sind 1,3-Butadien und Isopren, besonders bevorzugt ist 1,3-Butadien.

Bei den Verbindungen (C) handelt es sich um mindestens eine, beispielsweise ein bis drei, bevorzugt ein bis zwei besonders bevorzugt genau eine ethylenisch ungesättigte Verbindung mit mindestens einer, beispielsweise ein bis zwei, bevorzugt genau einer Amidfunktion und ein bis zwei, bevorzugt genau einer ethylenisch ungesättigten Doppelbindung ausgewählt aus der Gruppe bestehend aus
(C1) Verbindungen mit mindestens einer Amidfunktion und
(C2) Hydroxyalkyl(meth)acrylaten.

Bei den Verbindungen (C1) handelt es sich um Verbindungen mit mindestens einer, beispielsweise ein bis drei, bevorzugt ein bis zwei und besonders bevorzugt genau einer Amidfunktion.

Unter einer Amidfunktion werden hier Carbonsäureamidfunktionen (-(CO)-N<) verstanden, die am amidischen Stickstoffatom un-, einfach oder doppelt substituiert sein können, bevorzugt unsubstituiert. Im bevorzugten ersten Fall handelt es sich um eine Funktion (-(CO)-NH₂).

Besonders bevorzugt handelt es sich um bei den Monomeren (C1) um Acryl- oder Methacrylamide (C1a).

Beispiele für Monomere (C1a) sind N-Methylacrylamid, N-Methylmethacrylamid, N-Ethylacrylamid, N-Ethylmethacrylamid, N-n-Propylacrylamid, N-n-Propylmethacrylamid, N-iso-Propylacrylamid, N-iso-Propylmethacrylamid, N,N-Dimethylacrylamid, N,N-Dimethylmethacrylamid, Diacetonacrylamid und N,N'-Methylenbisacrylamid.

Bevorzugt handelt es sich um Acrylamid oder Methacrylamid und besonders bevorzugt um Acrylamid.

Weitere Verbindungen (C1) sind N-Vinyl carbonsäureamide (C1b), wobei das zugrundeliegende Carbonsäureamid aliphatisch oder cyclisch sein kann und bevorzugt nicht mehr als 6, besonders bevorzugt nicht mehr als 4, ganz besonders bevorzugt nicht mehr als 2 und insbesondere 1 Kohlenstoffatom aufweist.

Bevorzugte Verbindungen (C1b) sind N-Vinylformamid, N-Vinylacetamid, N-Vinylpyrrolidon und N-Vinylcaprolactam.

Bei den Hydroxyalkyl(meth)acrylaten (C2) handelt es sich einfache Acrylsäure- oder Methacrylsäureester von aliphatischen Diolen, wobei die Diole bevorzugt nicht mehr als 6, besonders bevorzugt nicht mehr als 4, ganz besonders bevorzugt nicht mehr als 3 und insbesondere 2 Kohlenstoffatome aufweisen. Bevorzugt handelt es sich bei den Diolen um 1,ω-Diole.

Bevorzugte Verbindungen (C2) sind somit 2-Hydroxyethylacrylat, 2-Hydroxyethylmethacrylat, 2-Hydroxypropylacrylat, 2-Hydroxypropylmethacrylat, 3-Hydroxypropylacrylat, 3-Hydroxypropylmethacrylat, 4-Hydroxybutylacrylat und 4-Hydroxybutylmethacrylat. Besonders bevorzugt sind 2-Hydroxyethylacrylat, 2-Hydroxyethylmethacrylat, 2-Hydroxypropylacrylat und 2-Hydroxypropylmethacrylat, ganz besonders bevorzugt sind 2-Hydroxyethylacrylat und 2-Hydroxyethylmethacrylat.

Von den Verbindungen (C) sind (C1a) und (C2) bevorzugt, besonders bevorzugt sind die Verbindungen (C1a).

Bei den optionalen Verbindungen (D) handelt es sich um mindestens eine andere als die bisher beschriebenen Verbindungen (A) und (C) mit genau einer ethylenisch ungesättigten Doppelbindung.

Bevorzugt sind die Verbindungen (D) ausgewählt aus der Gruppe bestehend aus
(D1) Estern aus Vinylalkohol und 1 bis 18 C-Atome aufweisenden Monocarbonsäuren, wie Vinylacetat, Vinylpropionat, Vinyl-n-butyrat, Vinyllaurat und Vinylstearat,
(D2) Estern aus vorzugsweise 3 bis 6 C-Atome aufweisenden α,β-monoethylenisch ungesättigten Mono- und Dicarbonsäuren, wie beispielsweise Acrylsäure, Methacrylsäure, Maleinsäure, Fumarsäure und Itaconsäure, bevorzugt Acrylsäure und Methacrylsäure, besonders bevorzugt Acrylsäure, mit im allgemeinen 1 bis 12, vorzugsweise 1 bis 8 und insbesondere 1 bis 4 C-Atome aufweisenden Alkanolen, wie bevorzugt Acrylsäure- und Methacrylsäuremethyl-, -ethyl-, -n-butyl-, -iso-butyl und -2-ethylhexylester, Maleinsäuredimethylester oder Maleinsäure-di-n-butylester, besonders bevorzugt - methyl, -ethyl, n-butyl oder 2-ethylhexylester,
(D3) Nitrilen α,β-monoethylenisch ungesättigter Carbonsäuren, wie Acrylnitril oder Methacrylnitril, und
(D4) α,β-monoethylenisch ungesättigten Mono- und Disäuren, beispielsweise Acrylsäure, Methacrylsäure, Itakonsäure, Vinylphosphonsäure, Vinylsulfonsäure, Maleinsäure, Maleinsäureanhydrid.

Bei den optionalen Monomeren (E) handelt es sich um mindestens eine andere Verbindung mit mindestens zwei, beispielsweise 2 bis 6, bevorzugt 2 bis 4, besonders bevorzugt 2 bis 3 und ganz besonders bevorzugt zwei ethylenisch ungesättigten Doppelbindungen.

Beispiele hierfür sind wenigstens zwei Vinylreste aufweisende Monomere, wenigstens zwei Vinylidenreste aufweisende Monomere sowie wenigstens zwei Alkenylreste aufweisende Monomere. Besonders vorteilhaft sind dabei die Di-Ester zweiwertiger Alkohole mit α,β-monoethylenisch ungesättigten Monocarbonsäuren unter denen die Acryl-und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylen-glykoldiacrylat, 1,3-Butylenglykoldiacrylat, 1,4-Butylenglykoldiacrylat und E-thylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie o-, m- und/oder p-Divinylbenzol, Vinylmethacrylat, Vinylacrylat, Allylmethacrylat, Allylacrylat, Diallylmaleat, Diallylfumarat, Diallylphthalat, Methylenbisacrylamid, Cyclopentadienylacrylat, Triallylcyanurat oder Triallylisocyanurat.

Selbstverständlich können auch Gemische der vorgenannten Monomeren (E) eingesetzt werden.

Vorteilhaft werden o-, m- oder p-Divinylbenzol, 1,4-Butylenglykoldiacrylat, Vinylacrylat, Vinylmethacrylat, Allylacrylat und/oder Allylmethacrylat als Monomere (E) eingesetzt.

Die Zusammensetzung der Emulsionspolymerisate ist in der Regel wie folgt:
(A) 40 bis 80 Gew%, bevorzugt 50 bis 75 Gew%,
(B) 20 bis 60 Gew%, bevorzugt 25 bis 50 Gew%,
(C) 0,1 bis 10 Gew%, bevorzugt 0,2 bis 5 und besonders bevorzugt 0,3 bis 2 Gew%,
(D) 0 bis 30 Gew%, bevorzugt 0,1 bis 15 Gew% und besonders bevorzugt 0,5 bis 5 Gew%,
(E) 0 bis 5 Gew%, bevorzugt 0 bis 2 Gew% und besonders bevorzugt 0 Gew%,
mit der Maßgabe, daß die Summe immer 100 Gew% ist.

Merkmal der Erfindung ist, dass Monomere und gegebenenfalls auch Polymerisationsregler zumindest teilweise während der Polymerisation zugegeben werden, es sich also um ein Zulaufverfahren handelt.

Eine Teilmenge der Monomere kann, wenn gewünscht, zu Beginn der Polymerisation im Polymerisationsgefäß vorgelegt werden, die übrigen Monomere, bzw. alle Monomere, wenn keine Monomere vorgelegt werden, werden beim Zulaufverfahren im Laufe der Polymerisation zugegeben.

Auch der Regler (siehe unten) kann zum Teil vorgelegt werden, ganz oder teilweise während der Polymerisation oder gegen Ende der Polymerisation zugegeben werden.

Die Monomeren werden zumindest teilweise während der Polymerisation kontinuierlich zugegeben. Zum Teil können Monomere auch im Polymerisationsgefäß vor Beginn der Polymerisation vorgelegt werden.

Vorzugsweise wird maximal 30 Gew.-% der Gesamtmenge der Monomeren, besonders bevorzugt maximal 20 Gew.-%, ganz besonders bevorzugt maximal 10 Gew.-% der Monomeren im Polymerisationsgefäß vorgelegt. Die übrigen Monomeren, d.h. vorzugsweise mindestens 70 Gew.-%, besonders bevorzugt mindestens 80 Gew.-%, ganz besonders bevorzugt mindestens 90 Gew.-% werden während der Polymerisation kontinuierlich zugegeben. In einer besonderen Ausführungsform werden keine Monomeren vorgelegt, d.h. die Gesamtmenge der Monomere wird während der Polymerisation zugefahren.

Die Temperatur des Polymerisationsgemisches beträgt während der Polymerisation und entsprechend während der Zugabe der Monomeren vorzugsweise mindestens 50 °C, besonders bevorzugt mindestens 70 °C.

Die Zugabe der Monomeren zum Polymerisationsgefäß (Dosierungszeitraum) erfolgt vorzugsweise über einen Zeitraum von mindestens zwei Stunden, besonders bevorzugt mindestens 3 Stunden.

Im übrigen gilt für die Durchführung der Emulsionspolymerisation folgendes:

Die Emulsionspolymerisation erfolgt in der Regel bei 30 bis 130, vorzugsweise 50 bis 95 °C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Das Zulaufverfahren kann in Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, an polymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt. Bei der Polymerisation kann auch z.B. zur besseren Einstellung der Teilchengröße eine Polymersaat vorgelegt werden.

Die Art und Weise, in der der Initiator im Verlauf der radikalischen wässrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im einzelnen hängt dies von der chemischen Natur des Initiatorsystems als auch von der Polymersiationstemperatur ab. Vorzugsweise wird ein Teil vorgelegt und der Rest nach Maßgabe des Verbrauchs der Polymerisationszone zugeführt.

Zur Entfernung der Restmonomeren wird üblicherweise auch nach dem Ende der eigentlichen Emulsionspolymerisation, d.h. nach einem Umsatz der Monomeren von mindestens 95 %, Initiator zugesetzt.

Die einzelnen Komponenten können dem Reaktor beim Zulaufverfahren von oben, in der Seite oder von unten durch den Reaktorboden zugegeben werden.

Bei der Emulsionspolymerisation werden wässrige Dispersionen des Polymeren in der Regel mit Feststoffgehalten von 15 bis 75 Gew.-%, bevorzugt von 40 bis 60 Gew.-% erhalten.

Das so hergestellte Polymer wird vorzugsweise in Form seiner wässrigen Dispersion verwendet.

Die Glasübergangstemperatur des Polymeren beträgt vorzugsweise -60 bis +100°C, besonders bevorzugt -20 bis +60 °C und ganz besonders bevorzugt 0 bis 50°C.

Die Glasübergangstemperatur lässt sich nach üblichen Methoden wie Differentialthermoanalyse oder Differentail Scanning Calorimetrie (s. z.B. ASTM 3418/82, sog. "midpoint temperature") bestimmen.

Im vorliegenden erfindungsgemäßen Verfahren wird Wasser, bevorzugt Trinkwasser und insbesondere bevorzugt entionisiertes Wasser verwendet, dessen Gesamtmenge so bemessen wird, dass sie 30 bis 90 Gew.-% und vorteilhaft 50 bis 80 Gew.-%, jeweils bezogen auf die durch das erfindungsgemäße Verfahren zugängliche wässrige Copolymerisatdispersion, beträgt.

Erfindungsgemäß ist es möglich, gegebenenfalls eine Teil- oder die Gesamtmenge an Wasser im Polymerisationsgefäß vorzulegen. Es ist aber auch möglich, die Gesamtmenge oder die gegebenenfalls verbliebene Restmenge an Wasser gemeinsam mit den Monomeren, insbesondere in Form einer wässrigen Monomeren-emulsion zuzudosieren. Mit Vorteil wird eine kleine Teilmenge an Wasser im Polymerisationsgefäß vorgelegt und eine größere Teilmenge an Wasser in Form einer wässrigen Monomerenemulsion unter Polymerisationsbedingungen zudosiert.

Im Rahmen des erfindungsgemäßen Verfahrens werden Dispergiermittel mitverwendet, die sowohl die Monomerentröpfchen als auch die gebildeten Copolymerisatteilchen in der wässrigen Phase dispers verteilt halten und so die Stabilität der erzeugten wässrigen Copolymerisatdispersion gewährleisten. Als solche kommen sowohl die zur Durchführung von radikalischen wässrigen Emulsionspolymerisationen üblicherweise eingesetzten Schutzkolloide als auch Emulgatoren in Betracht.

Geeignete Schutzkolloide sind beispielsweise Polyvinylalkohole, Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Seiten 411 bis 420, Georg-Thieme-Verlag, Stuttgart, 1961.

Selbstverständlich können auch Gemische aus Emulgatoren und/oder Schutzkolloiden verwendet werden. Häufig werden als Dispergiermittel ausschließlich Emulgatoren eingesetzt, deren relative Molekulargewichte im Unterschied zu den Schutzkolloiden üblicherweise unter 1000 g/mol liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nichtionischen Emulgatoren verträglich. Desgleichen gilt auch für kationische Emulgatoren, während anionische und kationische Emulgatoren meistens nicht miteinander verträglich sind.

Gebräuchliche Emulgatoren sind z.B. ethoxilierte Mono-, Di- und Tri-Alkylphenole (EO-Grad: 3 bis 50, Alkylrest: C₄ bis C₁₂), ethoxilierte Fettalkohole (EO-Grad: 3 bis 50; Alkylrest: C₈ bis C₃₆) sowie Alkalimetall- und Ammoniumsalze von Alkylsulfaten (Alkylrest: C₈ bis C₁₂), von Schwefelsäurehalbestern ethoxylierter Alkanole (EO-Grad: 4 bis 30, Alkylrest: C₁₂ bis C₁₈) und ethoxilierter Alkylphenole (EO-Grad: 3 bis 50, Alkylrest: C₄ bis C₁₂), von Alkylsulfonsäuren (Alkylrest: C₁₂ bis C₁₈) und von Alkylarylsulfonsäuren (Alkylrest: C₉ bis C₁₈). Weitere geeignete Emulgatoren finden sich in Houben-Weyl, Methoden der organischen Chemie, Band XIV/1, Makromolekulare Stoffe, Seiten 192 bis 208, Georg-Thieme-Verlag, Stuttgart, 1961.

Als grenzflächenaktive Substanzen haben sich ferner Verbindungen der allgemeinen Formel I 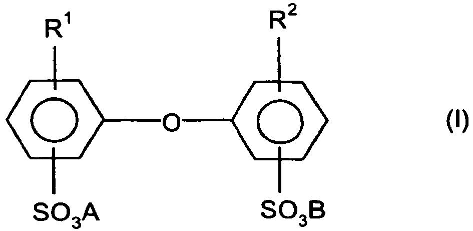 worin R¹ und R² C₄- bis C₂₄-Alkyl bedeuten und einer der Reste R¹ oder R² auch für Wasserstoff stehen kann, und A und B Alkalimetallionen und/oder Ammoniumionen sein können, erwiesen. In der allgemeinen Formel I bedeuten R¹ und R² bevorzugt lineare oder verzweigte Alkylreste mit 6 bis 18 C-Atomen, insbesondere mit 6, 12 und 16 C-Atomen oder H-Atome, wobei R¹ und R² nicht beide gleichzeitig H-Atome sind. A und B sind bevorzugt Natrium-, Kalium -oder Ammoniumionen, wobei Natriumionen besonders bevorzugt sind. Besonders vorteilhaft sind Verbindungen I, in denen A und B Natriumionen, R¹ ein verzweigter Alkylrest mit 12 C-Atomen und R² ein H-Atom oder R¹ sind. Häufig werden technische Gemische verwendet, die einen Anteil von 50 bis 90 Gew.-% des monoalkylierten Produktes aufweisen, beispielsweise Dowfax^{®} 2A1 (Marke der Dow Chemical Company). Die Verbindungen I sind allgemein bekannt, z. B. aus US-A 4 269 749, und im Handel erhältlich.

Bevorzugt werden für das erfindungsgemäße Verfahren nichtionische und/oder anionische Emulgatoren verwendet. Es können jedoch auch kationische Emulgatoren eingesetzt werden. Insbesondere bevorzugt werden anionische Emulgatoren, wie Alkylarylsulfonsäuren, Alkylsulfate, Schwefelsäurehalbester ethoxylierter Alkanole und/oder deren entsprechende Alkalimetallsalze eingesetzt.

In der Regel beträgt die Menge an eingesetztem Dispergiermittel mindestens 0,1 und bis zu 15 Gew.-%, bevorzugt mindestens 0,5 bis zu 5 Gew.-% und bevorzugt mindestens 0,5 bis zu 3 Gew.-%, jeweils bezogen auf die Gesamtmonomerenmenge.

Erfindungsgemäß ist es möglich, gegebenenfalls eine Teil- oder die Gesamtmenge an Dispergiermittel im Polymerisationsgefäß vorzulegen. Es ist aber auch möglich, die Gesamtmenge oder die gegebenenfalls verbliebene Restmenge an Dispergiermittel gemeinsam mit dem Monomeren, insbesondere in Form einer wässrigen Monomerenemulsion unter Polymerisationsbedingungen zuzudosieren.

Die Auslösung der radikalisch initiierten wässrigen Emulsionspolymerisation erfolgt mittels eines radikalischen Polymerisationsinitiators (Radikalinitiator). Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, -Kalium- oder Ammoniumsalze oder organische Peroxide, wie Alkylhydroperoxide, beispielsweise tert.-Butyl-, p-Mentyl- oder Cumylhydroperoxid, sowie Dialkyl- oder Diarylperoxide, wie Di-tert.-Butyl- oder DiCumylperoxid eingesetzt werden. Als Azoverbindung finden im wesentlichen 2,2'-Azobis(isobutyronitril), 2,2'-Azobis(2,4-dimethylvateronitril) und 2,2'-Azobis(amidinopropyl)dihydrochlorid (AIBA, entspricht V-50 von Wako Chemicals) Verwendung. Als Oxidationsmittel für Redoxinitiatorsysteme kommen im wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden. In der Regel beträgt die Menge des eingesetzten Radikalinitiators, bezogen auf die Gesamtmonomerenmenge, 0,01 bis 5 Gew.-%, bevorzugt 0,1 bis 3 Gew.-% und insbesondere bevorzugt 0,2 bis 1,0 Gew.-%.

Erfindungsgemäß ist es möglich, gegebenenfalls eine Teil- oder die Gesamtmenge an Radikalinitiator im Polymerisationsgefäß vorzulegen. Es ist aber auch möglich, die Gesamtmenge oder die gegebenenfalls verbliebene Restmenge an Radikalinitiator dem Polymerisationsgefäß unter Polymerisationsbedingungen zuzudosieren.

Erfindungsgemäß können auch weitere, dem Fachmann geläufige optionale Hilfsstoffe, wie beispielsweise sogenannte Verdicker, Entschäumer, Neutralisationsmittel, Konservierungsmittel, radikalkettenübertragende Verbindungen und/oder Komplexiermittel eingesetzt werden.

Um die Rheologie der so zugänglichen wässrigen Copolymerisatdispersionen bei Herstellung, Handling, Lagerung und Applikation optimal einzustellen, werden häufig sogenannte Verdicker oder Rheologieadditive als Formulierungsbestandteil eingesetzt. Dem Fachmann sind eine Vielzahl unterschiedlicher Verdicker bekannt, beispielsweise organische Verdicker, wie Xanthanverdicker, Guarverdicker (Polysaccharide), Carboxymethylcellulose, Hydroxyethylcellulose, Methylcellulose, Hydroxypropylmethylcellulose, Ethylhydroxyethylcellulose (Cellulosederivate), alkaliquellbare Dispersionen (Acrylatverdicker) oder hydrophob modifizierte, polyetherbasierte Polyurethane (Polyurethanverdicker) oder anorganische Verdicker, wie Bentonit, Hectorit, Smectit, Attapulgit (Bentone) sowie Titanate oder Zirkonate (Metallorganyle).

Um die Schaumbildung bei Herstellung, Handling, Lagerung und Applikation der so zugänglichen wässrigen Copolymerisatdispersionen zu vermeiden, finden sogenannte Entschäumer Verwendung. Die Entschäumer sind dem Fachmann geläufig. Es handelt sich hierbei im wesentlichen um Mineralöl- und die Silikonölentschäumer. Entschäumer, vor allem die hochaktiven silikonhaltigen, sind generell sehr sorgfältig auszuwählen und zu dosieren, da sie zu Oberflächendefekten (Krater, Dellen) der Beschichtung führen können. Wesentlich ist, dass durch Zusatz von feinstteiligen, hydrophoben Partikeln, beispielsweise hydrophobe Kieselsäure oder Wachspartikel, in die Entschäumerflüssigkeit, die Entschäumerwirkung noch gesteigert werden kann.

Falls erforderlich, können dem Fachmann als Neutralisationsmittel geläufige Säuren oder Basen zur pH-Werteinstellung der so zugänglichen wässrigen Polymerisatdispersionen verwendet werden.

Um den Befall der so zugänglichen wässrigen Copolymerisatdispersionen bei Herstellung, Handling, Lagerung und Applikation durch Mikroorganismen, wie beispielsweise Bakterien, (Schimmel)Pilzen oder Hefen zu vermeiden, werden häufig dem Fachmann geläufige Konservierungsmittel oder Biozide eingesetzt. Dabei finden insbesondere Wirkstoffkombinationen aus Methyl- und Chlorisothiazolinonen, Benzisothiazolinonen, Formaldehyd bzw. formaldehydabspaltende Agenzien Verwendung.

Neben den vorgenannten Komponenten können im erfindungsgemäßen Verfahren zur Herstellung der wässrigen Copolymerisatdispersionen optional auch radikalkettenübertragende Verbindungen eingesetzt werden, um das Molekulargewicht der durch die Polymerisation zugänglichen Copolymerisate zu reduzieren bzw. zu kontrollieren. Dabei kommen im wesentlichen aliphatische und/oder araliphatische Halogenverbindungen, wie beispielsweise n-Butylchlorid, n-Butylbromid, n-Butyljodid, Methylenchlorid, Ethylendichlorid, Chloroform, Bromoform, Bromtrichlormethan, Dibromdichlormethan, Tetrachlorkohlenstoff, Tetrabromkohlenstoff, Benzylchlorid, Benzylbromid, organische Thioverbindungen, wie primäre, sekundäre oder tertiäre aliphatische Thiole, wie beispielsweise Ethanthiol, n-Propanthiol, 2-Propanthiol, n-Butanthiol, 2-Butanthiol, 2-Methyl-2-propanthiol, n-Pentanthiol, 2-Pentanthiol, 3-Pentanthiol, 2-Methyl-2-butanthiol, 3-Methyl-2-butanthiol, n-Hexanthiol, 2-Hexanthiol, 3-Hexanthiol, 2-Methyl-2-pentanthiol, 3-Methyl-2-pentanthiol, 4-Methyl-2-pentanthiol, 2-Methyl-3-pentanthiol, 3-Methyl-3-pentanthiol, 2-Ethylbutanthiol, 2-Ethyl-2-butanthiol, n-Heptanthiol und seine isomeren Verbindungen, n-Octanthiol und seine isomeren Verbindungen, n-Nonanthiol und seine isomeren Verbindungen, n-Decanthiol und seine isomeren Verbindungen, n-Undecanthiol und seine isomeren Verbindungen, n-Dodecanthiol und seine isomeren Verbindungen, n-Tridecanthiol und seine isomeren Verbindungen, substituierte Thiole, wie beispielsweise 2-Hydroxyethanthiol, aromatische Thiole, wie Benzolthiol, ortho-, meta-, oder para-Methylbenzolthiol, sowie alle weiteren im Polymerhandbook 3rd edition, 1989, J. Brandrup und E.H. Immergut, John Weley & Sons, Abschnitt II, Seiten 133 bis 141, beschriebenen Schwefelverbindungen, aber auch aliphatische und/oder aromatische Aldehyde, wie Acetaldeyhd, Propionaldehyd und/oder Benzaldehyd, ungesättigte Fettsäuren, wie Ölsäure, Diene mit nicht konjugierten Doppelbindungen, wie Divinylmethan oder Vinylcyclohexan oder Kohlenwasserstoffe mit leicht abstrahierbaren Wasserstoffatomen, wie beispielsweise Toluol, zum Einsatz. Vorteilhaft werden tert.-Dodecylmercaptan, 2,4-Diphenyl-4-methyl-1-penten sowie Terpinolen (siehe beispielsweise DE-A 10046930 oder DE-A 10148511) eingesetzt.

Die Gesamtmenge der weiteren optionalen Hilfsstoffe, bezogen auf die Gesamtmonomerenmenge, ist in der Regel nicht mehr als 10 Gew.-%, nicht mehr als 5 Gew.-% und oft nicht mehr als 3 Gew.-%.

Erfindungsgemäß ist es möglich, gegebenenfalls Teil- oder Gesamtmengen an weiteren optionalen Hilfsstoffen im Polymerisationsgefäß vorzulegen. Es ist aber auch möglich, Gesamtmengen oder die gegebenenfalls verbliebenen Restmengen an weiteren optionalen Hilfsstoffen unter Polymerisationsbedingungen, gegebenenfalls als Bestandteil des Monomerengemisches bzw. der dieses enthaltenden wässrigen Monomerenemulsion zuzudosieren.

Optional kann die erfindungsgemäße radikalisch initiierte wässrige Emulsionspolymerisation auch in Anwesenheit einer Polymersaat, beispielsweise in Anwesenheit von 0,01 bis 10 Gew.-%, häufig von 0,01 bis 5 Gew.-% und oft von 0,04 bis 3,5 Gew.-% einer Polymersaat, jeweils bezogen auf die Gesamtmonomerenmenge, erfolgen.

Eine Polymersaat wird insbesondere dann eingesetzt, wenn die Teilchengröße der mittels radikalisch wässriger Emulsionspolymerisation herzustellender Polymerpartikel gezielt eingestellt werden soll (siehe hierzu beispielsweise US-A 2,520,959 und US-A 3,397,165).

Insbesondere werden Polymersaatpartikel eingesetzt, deren Teilchengrößenverteilung eng und deren gewichtsmittlerer Durchmesser D_{w} bis zu 300 nm, häufig mindestens 5 nm bis zu 200 nm und oft mindestens 80 nm bis zu 200 nm ist. Die Bestimmung der gewichtsmittleren Teilchendurchmesser ist dem Fachmann bekannt und erfolgt beispielsweise über die Methode der Analytischen Ultrazentrifuge. Unter gewichtsmittlerem Teilchendurchmesser wird in dieser Schrift der nach der Methode der Analytischen Ultrazentrifuge ermittelte gewichtsmittlere D_{w50}-Wert verstanden (vgl. hierzu S.E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, Seiten 147 bis 175).

Unter enger Teilchengrößenverteilung soll im Rahmen dieser Schrift verstanden werden, wenn das Verhältnis der nach der Methode der Analytischen Ultrazentrifuge ermittelten gewichtsmittleren Teilchendurchmesser D_{w50} und zahlenmittleren Teilchendurchmesser D_{N50} [D_{w50}/D_{N50}] bis zu 2,0, bevorzugt bis zu 1,5 und insbesondere bevorzugt bis zu 1,2 oder bis zu 1,1 ist.

Üblicherweise wird die Polymersaat in Form einer wässrigen Polymerisatdispersion eingesetzt. Die vorgenannten Mengenangaben beziehen sich dabei auf den Polymerisatfeststoffanteil der wässrigen Polymersaatdispersion; sie sind daher als Gew.-Teile Polymersaatfeststoff, bezogen auf die Gesamtmonomerenmenge, angegeben.

Wird eine Polymersaat verwendet, so wird vorteilhaft eine Fremdpolymersaat eingesetzt. Im Unterschied zu einer sogenannten in situ-Polymersaat, welche vor Beginn der eigentlichen Emulsionspolymerisation im Reaktionsgefäß hergestellt wird und welche die gleiche monomere Zusammensetzung aufweist wie das durch die nachfolgende radikalisch initiierte wässrige Emulsionspolymerisation hergestellte Polymerisat, wird unter einer Fremdpolymersaat eine Polymersaat verstanden, die in einem separaten Reaktionsschritt hergestellt wurde und deren monomere Zusammensetzung von dem durch die radikalisch initiierte wässrige Emulsionspolymerisation hergestellten Polymerisat verschieden ist, was jedoch nichts anderes bedeutet, als dass zur Herstellung der Fremdpolymersaat und zur Herstellung der wässrigen Polymerisatdispersion unterschiedliche Monomere bzw. Monomerenmischungen mit unterschiedlicher Zusammensetzung eingesetzt werden. Die Herstellung einer Fremdpolymersaat ist dem Fachmann geläufig und erfolgt üblicherweise dergestalt, dass eine relativ kleine Menge an Monomeren sowie eine relativ große Menge an Emulgatoren in einem Reaktionsgefäß vorgelegt und bei Reaktionstemperatur eine ausreichende Menge an Polymerisationsinitiator zugegeben wird.

Erfindungsgemäß bevorzugt wird eine Polymerfremdsaat mit einer Glasübergangstemperatur mindestens 50 °C, häufig mindestens 60 °C oder mindestens 70 °C und oft mindestens 80 °C oder mindestens 90 °C eingesetzt. Insbesondere bevorzugt ist eine Polystyrol- oder eine Polymethylmethacrylat-Polymersaat.

Erfindungsgemäß ist es möglich, gegebenenfalls eine Teil- oder die Gesamtmenge an Fremdpolymersaat als weiteren optionalen Hilfsstoff im Polymerisationsgefäß vorzulegen. Es ist aber auch möglich, die Gesamtmenge oder die gegebenenfalls verbliebene Restmengen an Fremdpolymersaat unter Polymerisationsbedingungen zuzudosieren.

Unter Polymerisationsbedingungen sind diejenigen Temperaturen und Drücke zu verstehen, unter denen die radikalisch initiierte wässrige Emulsionspolymerisation mit ausreichender Polymerisationsgeschwindigkeit verläuft. Diese ist jedoch insbesondere abhängig vom verwendeten Radikalinitiator ist. Vorteilhaft werden Art und Menge des Radikalinitiators, Polymerisationstemperatur und Polymerisationsdruck so ausgewählt, dass der Radikalinitiator eine Halbwertszeit bis zu 3 Stunden, insbesondere vorteilhaft bis zu 1 Stunde und ganz besonders vorteilhaft bis zu 30 Minuten aufweist.

Abhängig vom gewählten Radikalinitiator kommt als Reaktionstemperatur für die erfindungsgemäße radikalische wässrige Emulsionspolymerisation der gesamte Bereich von 0 bis 170 °C in Betracht. Dabei werden in der Regel Temperaturen von 50 bis 150 °C, insbesondere 60 bis 130 °C und vorteilhaft 70 bis 120 °C angewendet. Die erfindungsgemäße radikalische wässrige Emulsionspolymerisation kann bei einem Druck kleiner, gleich oder größer 1 atm durchgeführt werden, so dass die Polymerisationstemperatur 100 °C übersteigen und bis zu 170 °C betragen kann. Vorzugsweise wird in Anwesenheit von leichtflüchtigen Monomeren, wie beispielsweise Ethylen, Butadien oder Vinylchlorid unter erhöhtem Druck polymerisiert. Dabei kann der Druck 1,2, 1,5, 2, 5, 10, 15 bar (absolut) oder noch höhere Werte einnehmen. Werden Emulsionspolymerisationen im Unterdruck durchgeführt, werden Drücke von 950 mbar, häufig von 900 mbar und oft 850 mbar (absolut) eingestellt. Vorteilhaft wird die erfindungsgemäße radikalische wässrige Emuslionspolymerisation bei erhöhtem Druck unter Inertgasatmosphäre, wie beispielsweise unter Stickstoff oder Argon durchgeführt.

In der Regel erfolgt das erfindungsgemäße Verfahren dergestalt, dass im Polymerisationsgefäß bei 20 bis 25 °C (Raumtemperatur) unter Inertgasatmospäre eine Teilmenge des entionisierten Wassers, des Dispergiermittels sowie gegebenenfalls eine Teilmenge der Monomeren und des Radikalinitiators vorgelegt werden, daran anschließend das Vorlagengemisch unter Rühren auf die geeignete Polymerisationstemperatur aufgeheizt wird und danach die Restmengen an entionisiertem Wasser und Dispergierhilfsmittel sowie die Gesamtmengen bzw. die gegebenenfalls verbliebene Restmengen an Monomeren sowie Radikalinitiator zudosiert werden. Dabei kann die Dosierung der Monomeren, des Radikalinitiators sowie der anderen Komponenten diskontinuierlich in mehreren Teilmengen sowie kontinuierlich mit gleichbleibenden oder sich verändernden Mengenströmen erfolgen.

Üblicherweise wird eine Polymerisation so durchgeführt, daß man über die gesamte Dosierungszeit die Monomere gleichmäßig in eine Vorlage, die ihrerseits Monomere enthalten kann, dosiert, d.h. es besteht über den gesamten Dosierungszeitraum ein linearer Zusammenhang zwischen dem Anteil des dem Reaktionsgemisch zudosierten Monomers an der Gesamtmenge der Monomeren und dem aktuellen Anteil der verstrichenenen Dosierungszeit an dem Dosierungszeitraum. Wenn beispielsweise über einen Dosierungszeitraum von einer Stunde 100 g eines Monomers oder eines Monomerengemisches polymerisiert werden, so bedeutet dies, daß nach 15 Minuten 25 g in das polymerisierende Reaktionsgemisch dosiert worden sind, nach 30 Minuten 50 g und nach 50 Minuten 84 g.

Die vorliegende Erfindung zeichnet sich dadurch aus, daß bei der Dosierung zumindest des Monomeren (C) in der ersten Hälfte des Dosierungszeitraums dem Reaktionsgemisch weniger als die Hälfte der Gesamtmenge des Monomers (C) zudosiert wird, bevorzugt nicht mehr als 45 Gew%, besonders bevorzugt nicht mehr als 40 und ganz besonders bevorzugt nicht mehr als 35 Gew%.

Umgekehrt formuliert bedeutet dies, daß in der zweiten Hälfte des Dosierungszeitraums mehr als die Hälfte der Gesamtmenge des Monomers (C) zudosiert wird, bevorzugt mehr als 55 Gew%, besonders bevorzugt mehr als 60 und ganz besonders bevorzugt mehr als 65 Gew%.

Es kann optional bevorzugt sein, am Ende des Dosierungszeitraums kein Monomer (C) mehr zuzudosieren, beispielsweise in den letzten 5% des Dosierungszeitraums und bevorzugt in den letzten 10%.

In einer bevorzugten Ausführungsform erfolgt die Dosierung der Monomeren in Form von zwei oder mehr, bevorzugt zwei Monomerenemulsionen, wobei die erste Monomerenemulsion (Monomerenemulsion 1) mindestens 60 Gew.-% der Gesamtmonomerenmenge, aber höchstens 40 Gew.-% der Gesamtmenge der Monomeren (C) enthält, während die zweite Monomerenemulsion (Monomerenemulsion 2) höchstens 40 Gew.-% der Gesamtmonomerenmenge, aber mindestens 60 Gew.-% der Gesamtmenge der Monomeren (C) enthält. Dabei erfolgt das erfindungsgemäße Verfahren dergestalt, dass zuerst Monomerenemulsion 1 und daran anschließend Monomerenemulsion 2 dem Polymerisationsgefäß unter Polymerisationsbedingungen zugeführt wird. Erfindungsgemäß ist es dabei möglich, dass gegebenenfalls eine Teilmenge der Monomerenemulsion 1 im Polymerisationsgefäß vorgelegt werden und die Gesamtmenge bzw. die gegebenenfalls verbliebene Restmenge der Monomerenemulsion 1 dem Polymerisationsgefäß unter Polymerisationsbedingungen diskontinuierlich in mehreren Portionen oder kontinuierlich mit gleichbleibenden oder sich verändernden Mengenströmen zudosiert werden. Daran anschließend wird dem Polymerisationsgefäß die Monomerenemulsion 2 unter Polymerisationsbedingungen diskontinuierlich in mehreren Portionen oder kontinuierlich mit gleichbleibenden oder sich verändernden Mengenströmen zudosiert.

Eine weitere bevorzugte Ausführungsform stellt es dar, in der Monomerenemulsion 1 die Monomere (A) und (B), sowie die optionalen Monomere (D) und (E) zu vermengen, so daß die Monomerenemulsion 2 vollständig das Monomer (C) enthält.

Die Monomerenemulsion 2 kann nach diesen Ausführungsformen über mindestens zwei, beispielsweise zwei bis vier, bevorzugt zwei bis drei Abschnitte des Dosierungszeitraums unterschiedlich dosiert werden. Dabei kann es bevorzugt sein, während eines Abschnittes des Dosierungszeitraums dem Reaktionsgemisch kein Monomer (C) zuzudosieren.

Bevorzugt wird das Monomer (C) mit der gewünschten Dosierungsgeschwindigkeit und -menge in einen bevorzugt konstanten Strom der anderen Monomere eindosiert und kurz vor der Zugabe in das Reaktionsgemisch mittels eines statischen oder bevorzugt eines dynamischen Mischers, beispielsweise einer Mischpumpe, mit dem restlichen Monomerenstrom vermischt.

Ohne an eine Theorie gebunden sein zu wollen wird vermutet, daß durch die erfindungsgemäße Zugabe des hydrophilen Monomers (C) in das Reaktionsgemisch aus hydrophoben Monomeren relativ hydrophile Domänen in einer hydrophoben Matrix erzeugt werden, so daß sich die erhöhte Hydrophilie des Monomers (C) besonders an der Oberfläche der Polymerpartikel auswirkt.

Vorteilhaft erfolgt die Wahl der Reaktionsbedingungen und die Reaktionsführung dergestalt, dass nach Initiierung der radikalischen Polymerisationsreaktion die Monomeren und der Radikalinitiator dem Polymerisationsgemisch im Polymerisationsgefäß so zugeführt werden, dass der Monomerenumsatz zu jedem Zeitpunkt mindestens 80 Gew.-%, vorteilhaft mindestens 90 Gew.-% und insbesondere vorteilhaft mindestens 95 Gew.-%, bezogen auf die Gesamtmenge der dem Polymerisationsgemisch zu diesem Zeitpunkt zugeführten Monomeren beträgt, was sich in einfacher Weise durch dem Fachmann geläufige reaktionskalorimetrische Messungen verifizieren lässt.
Im erfindungsgemäßen Verfahren können prinzipiell auch noch geringe Mengen (bis zu 10 Gew.-% bezogen auf die Gesamtwassermenge) an wasserlöslichen organischen Lösungsmitteln, wie beispielsweise Methanol, Ethanol, Isopropanol, Butanole, Pentanole, aber auch Aceton eingesetzt werden. Bevorzugt wird das erfindungsgemäße Verfahren jedoch in Abwesenheit solcher Lösungsmittel durchgeführt.

Der über quasielastische Lichtstreuung (ISO-Norm 13 321) ermittelte zahlenmittlere Teilchendurchmesser (cumulant z-average) der nach dem erfindungsgemäßen Verfahren erhaltenen wässrigen Copolymerisatdispersionen liegt in der Regel zwischen 10 und 2000 nm, häufig zwischen 20 und 300 nm und oft zwischen 30 und 200 nm.

Selbstverständlich können bei den so erhaltenen wässrigen Copolymerisatdispersionen die verbleibenden Restgehalte an nicht umgesetzten Monomeren sowie anderen leichtsiedenden Verbindungen durch dem Fachmann geläufige chemische und/oder physikalische Methoden [siehe beispielsweise EP-A 771328,
DE-A 19624299, DE-A 19621027, DE-A 19741184, DE-A 19741187, DE-A 19805122, DE-A 19828183, DE-A 19839199, DE-A 19840586 und 19847115] herabgesetzt werden.

Die so erhaltenen wäßrigen Polymerdispersion haben vorzugsweise einen Feststoffgehalt von 35 bis 65, besonders bevorzugt von 45 bis 55 Gew.-%.

Die Polymerdispersionen zeichnet sich durch eine hohe Stabilität aus, es kommt kaum zu Koagulatbildungen.

Die Mindestfilmbildetemperatur (MFT) der Polymerdispersionen beträgt vorteilhaft weniger als 70 °C.

Die Polymerdispersionen können als Bindemittel für Beschichtungsmassen, z.B. für Lacke, Schutzüberzüge, Straßenmarkierungen, dekorative Überzüge, Anstrichfarben, Beschichtungen auf Textilien, Leder oder Lederersatzstoffen zur Verbesserung der Frühwasserbeständigkeit verwendet werden.

Für die unterschiedliche Verwendung können geeignete Hilfsmittel zugesetzt werden, z.B Verlaufsmittel, Verdicker, Entschäumer, Füllstoffe, Pigmente, Dispergierhilfsmittel für Pigmente.

Die Beschichtungen können durch Auftragen der Beschichtungsmassen auf geeignete Substrate, wie Holz, Beton, Metall, Glas, Kunststoff, Keramiken, Putze, Stein, Asphalt, Textilien, gestrichene, grundierte oder verwitterte Untergründe erhalten werden, bevorzugt auf Metall.

Das Aufbringen auf das Substrat kann in bekannter Weise, z. B. durch Spritzen, Spachteln, Rakeln, Bürsten, Rollen, Walzen oder Gießen erfolgen. Die Beschichtungsstärke liegt in der Regel in einem Bereich von 3 bis 1000 g/m² und vorzugsweise 10 bis 200 g/m². Anschließend werden die flüchtigen Bestandteile der Dispersionen entfernt. Dieser Vorgang kann gewünschtenfalls ein- oder mehrfach wiederholt werden.

Zur Entfernung des in der Dispersion enthaltenen Wassers wird nach dem Aufbringen auf das Substrat getrocknet, beispielsweise in einem Tunnelofen oder durch Ablüften. Die Trocknung kann auch durch NIR-Strahlung erfolgen, wobei als NIR-Strahlung hier elektromagnetische Strahlung im Wellenlängenbereich von 760 nm bis 2,5 µm, bevorzugt von 900 bis 1500 nm bezeichnet ist. Das Trocknen kann bei einer Temperatur von Umgebungstemperatur bis 100 °C über einen Zeitraum von wenigen Minuten bis mehreren Tagen erfolgen.

Die erhaltene Beschichtungen zeichnen sich in der Regel durch eine gleichmäßige Oberfläche, insbesondere auch durch Blasenfreiheit aus.

Insbesondere eignet sich die Polymerdispersion in einer besonderen Ausführungsform als Bindemittel für Korrosionsschutzlacke und als Bindemittel für Anstrichfarben. Weiterhin eignen sich die erfindungsgemäß hergestellten Polymerdispersionen als Primer für Korrosionsschutzlacke.

Neben der Polymerdispersion können die Korrosionsschutzlacke noch Korrosionsschutzmittel, wie Korrosionsinhibatoren oder aktive Korrisionsschutzpigmente, z.b. Zinkphosphat enthalten.

Auch ohne weitere Korrosionsschutzmittel hat die Polymerdispersion bereits eine gute Korrosionsschutzwirkung.

Mit den Polymerdispersionen werden zum Korrosionsschutz als Substrate die Oberflächen von Eisen, Stahl, Zn, Zn-Legierungen, Al oder Al-Legierungen behandelt. Die Oberfläche können unbeschichtet sein, mit Zink, Aluminium oder deren Legierungen überzogen sein, feuerverzinkt, galvanisch verzinkt, sherardisiert oder mit Primern vorbeschichtet sein.

Anstrichfarben, auch Dispersionsfarben genannt, sind eine der größten Produktgruppen der Lack- und Farbenindustrie (siehe Ullmanns Enzyklopädie der technischen Chemie, 4. Aufl., Band 15, Verlag Chemie, Weinheim 1978, S. 665). Dispersionsfarben enthalten in der Regel als Bindemittel ein filmbildendes Polymer und als farbgebenden Bestandteil wenigstens ein anorganisches Pigment, ferner anorganische Füllstoffe und Hilfsmittel, wie Entschäumer, Verdicker, Netzmittel und gegebenenfalls Filmbildehilfsmittel.

Eine weitere wichtige Eigenschaft der Polymerdispersionen ist die gute Blockfestigkeit der Anstriche, darunter versteht man eine geringe Verklebung des Anstrichfilms mit sich selbst unter Druckbelastung und erhöhter Temperatur (gute Blockfestigkeit).

Die Anstrichfarben (Dispersionsfarben) enthalten Pigmente und Füllstoffe vorzugsweise in solchen Mengen, daß die Pigment-Volumen-Konzentration (PVK) 15 % bis 85 % und besonders bevorzugt 25 % bis 55 % beträgt.

Typische Pigmente sind beispielsweise Titandioxid, vorzugsweise in der Rutilform, Bariumsulfat, Zinkoxid, Zinksulfid, basisches Bleicarbonat, Antimontrioxid, Lithopone (Zinksulfid + Bariumsulfat) verwendet. Die Dispersionsfarben können jedoch auch farbige Pigmente, beispielsweise Eisenoxide, Ruß, Graphit, lumineszente Pigmente, Zinkgelb, Zinkgrün, Ultramarin, Manganschwarz, Antimonschwarz, Manganviolett, Pariser Blau oder Schweinfurter Grün enthalten. Neben den anorganischen Pigmenten können die Dispersionsfarben auch organische Farbpigmente, z. B. Sepia, Gummigutt, Kasseler Braun, Toluidinrot, Pararot, Hansagelb, Indigo, Azofarbstoffe, anthrachinoide und indigoide Farbstoffe sowie Dioxazin, Chinacridon-, Phthalocyanin-, Isoindolinon-und Metallkomplexpigmente enthalten.

Geeignete Füllstoffe umfassen Alumosilicate, wie Feldspäte, Silicate, wie Kaolin, Talkum, Glimmer, Magnesit, Erdalkalicarbonate, wie Calciumcarbonat, beispielsweise in Form von Calcit oder Kreide, Magnesiumcarbonat, Dolomit, Erdalkalisulfate, wie Calciumsulfat, Siliciumdioxid. Die Füllstoffe können als Einzelkomponenten eingesetzt werden. In der Praxis haben sich jedoch Füllstoffmischungen besonders bewährt, z. B. Calciumcarbonat/Kaolin, Calciumcarbonat/Talkum.

Zur Erhöhung der Deckkraft und zur Einsparung von Weißpigmenten werden häufig feinteilige Füllstoffe, z. B. feinteiliges Calciumcarbonat oder Mischungen verschiedener Calciumcarbonate mit unterschiedlichen Teilchengrößen eingesetzt. Zur Einstellung der Deckkraft des Farbtons und der Farbtiefe werden vorzugsweise Abmischungen aus Farbpigmenten und Füllstoffen eingesetzt.

Die unter Verwendung der Dispersionsfarben hergestellten Anstriche und Korrosionsschutzbeschichtungen zeichnen sich durch eine hohe Wasserbeständigkeit aus. Die angestrebte höhere Hydrophobie wird beispielsweise durch eine verringert Wasseraufnahme ausgedrückt.

### Beispiele

### Herstellung der Copolymerisatdispersionen

### Vergleichsdispersion VD

In einem 6 L Druckreaktor, ausgerüstet mit einem MIG-Rührer und 4 Dosiereinrichtungen wurden bei Raumtemperatur und unter Stickstoffatmosphäre 490 g entionisiertes Wasser, 157 g einer 7 gew.-%igen wässrigen Itakonsäure-Lösung und 73g einer 33 gew.-%igen Polystyrolsaat (Partikelgröße 30 nm, mit 16 Gewichtsteilen Emulgator Disponil® LDPS 20) und jeweils 5 Gew.-% der Zuläufe 1A, 1B und 2 vorgelegt. Anschließend wurde der Reaktorinhalt unter Rühren (180 Upm) auf 90 °C aufgeheizt, und bei Erreichen von 85 °C wurden 57 g einer 3,5 gew.-%igen wässrigen Natriumpersulfat-Lösung zugegeben. Nach 10 Minuten wurden zeitgleich beginnend die Gesamtmenge an Zulauf 1A und Zulauf 2 innerhalb von 270 Minuten und Zulauf 3 innerhalb von 300 Minuten kontinuierlich mit gleichbleibenden Mengenströmen zudosiert. Ebenso zeitgleich wurde der Zulauf 2 innerhalb von 270 Minuten kontinuierlich mit gleichbleibenden Mengenströmen zudosiert. Über die gesamte Dosierzeit wurden die Mengenströme von Zulauf 1A, Zulauf 1 B und Zulauf 2 kurz vor dem Eintritt in den Reaktor über ein mechanisches Rührwerk (Blattrührer, 500 Upm) homogenisiert. Daran anschließend ließ man den Reaktorinhalt noch 1 Stunde bei 90 °C nachreagieren. Danach kühlte man den Reaktorinhalt auf Raumtemperatur ab und entspannte den Druckbehälter auf Atmosphärendruck. Das gebildete Koagulat wurde von der Dispersion durch Filtration über ein Sieb (Maschenweite 100 Mikrometer) abgetrennt. Nachfolgend wurde mit 25 gew.-%igen wässriger Ammoniak-Lösung auf einen pH-Wert von 7,5 eingestellt.

### Zulauf 1 A

homogene Mischung aus
   700 gentionisiertes Wasser
   63 g Disponil® FES 27 der Fa. Cognis (28 gew.-%ig)
   66 g Lutensol® AT 18 der Fa. BASF (20 gew.-%ig)
   314 geiner 7 gew.-%igen wässrigen Itakonsäure-Lösung
Zulauf 1 B
   22 g einer 50 gew.-%igen wässrigen Acrylamid-Lösung
Zulauf 2
   homogene Mischung aus
   1408 g Styrol
   31 g tertiär-Dodecylmercaptan
   748 g Butadien
Zulauf 3
   258 g einer 3,5 gew.-%igen wässrigen Natriumpersulfat-Lösung

Die erhaltene wässrige Copolymerisatdispersion VD wies einen Feststoffgehalt von 48,4 Gew.-%, bezogen auf das Gesamtgewicht der wässrigen Dispersion, auf. Die Glasübergangstemperatur wurde zu 14,3 °C und die Teilchengröße zu 143 nm bestimmt. Die Wasseraufnahmewerte der Polymerfilme sind in Tabelle 1 wiedergegeben.

### Copolymerisatdispersion D1

In einem 6 L Druckreaktor, ausgerüstet mit einem MIG-Rührer und 4 Dosiereinrichtungen wurden bei Raumtemperatur und unter Stickstoffatmosphäre 490 g entionisiertes Wasser, 157 g einer 7 gew.-%igen wässrigen Itakonsäure-Lösung und 73g einer 33 gew.-%igen Polystyrolsaat (Partikelgröße 30 nm, mit 16 Gewichtsteilen Emulgator Disponil® LDPS 20) und jeweils 5 Gew.-% der Zuläufe 1A, 1 B und 2 vorgelegt. Anschließend wurde der Reaktorinhalt unter Rühren (180 Upm) auf 90 °C aufgeheizt, und bei Erreichen von 85 °C wurden 57 g einer 3,5 gew.-%igen wässrigen Natriumpersulfat-Lösung zugegeben. Nach 10 Minuten wurden zeitgleich beginnend die Gesamtmenge an Zulauf 1A und Zulauf 2 innerhalb von 270 Minuten und Zulauf 3 innerhalb von 300 Minuten kontinuierlich mit gleichbleibenden Mengenströmen zudosiert. Ebenso zeitgleich wurde der Zulauf 1 B gestartet, dabei wurde 40% der Menge dieses Zulaufs innerhalb der ersten 210 Minuten und 60% der Menge dieses Zulaufs innerhalb der nachfolgenden 60 Minuten zudosiert. Über die gesamte Dosierzeit wurden die Mengenströme von Zulauf 1A, Zulauf 1 B und Zulauf 2 kurz vor dem Eintritt in den Reaktor über ein mechanisches Rührwerk (Blattrührer, 500 Upm) homogenisiert. Daran anschließend ließ man den Reaktorinhalt noch 1 Stunde bei 90 °C nachreagieren. Danach kühlte man den Reaktorinhalt auf Raumtemperatur ab und entspannte den Druckbehälter auf Atmosphärendruck. Das gebildete Koagulat wurde von der Dispersion durch Filtration über ein Sieb (Maschenweite 100 Mikrometer) abgetrennt. Nachfolgend wurde mit 25 gew.-%igen wässriger Ammoniak-Lösung auf einen pH-Wert von 7,5 eingestellt.
Zulauf 1 A
   homogene Mischung aus
   700 gentionisiertes Wasser
   63 g Disponil® FES 27 der Fa. Cognis (28 gew.-%ig)
   66 g Lutensol® AT 18 der Fa. BASF (20 gew.-%ig)
   314 geiner 7 gew.-%igen wässrigen Itakonsäure-Lösung
Zulauf 1 B
   22 g einer 50 gew.-%igen wässrigen Acrylamid-Lösung
Zulauf 2
   homogene Mischung aus
   1408 g Styrol
   31 g tertiär-Dodecylmercaptan
   748 g Butadien
Zulauf 3
   258 g einer 3,5 gew.-%igen wässrigen Natriumpersulfat-Lösung

Die erhaltene wässrige Copolymerisatdispersion wies einen Feststoffgehalt von 50,7 Gew.-%, bezogen auf das Gesamtgewicht der wässrigen Dispersion, auf. Die Glasübergangstemperatur wurde zu 14,8 °C und die Teilchengröße zu 141 nm bestimmt. Die Wasseraufnahmewerte der Polymerfilme sind in Tabelle 1 wiedergegeben.

### Copolymerisatdispersion D2

In einem 6 L Druckreaktor, ausgerüstet mit einem MIG-Rührer und 4 Dosiereinrichtungen wurden bei Raumtemperatur und unter Stickstoffatmosphäre 490 g entionisiertes Wasser, 157 g einer 7 gew.-%igen wässrigen Itakonsäure-Lösung und 73g einer 33 gew.-%igen Polystyrolsaat (Partikelgröße 30 nm, mit 16 Gewichtsteilen Emulgator Disponil® LDPS 20) und jeweils 5 Gew.-% der Zuläufe 1A, 1B und 2 vorgelegt. Anschließend wurde der Reaktorinhalt unter Rühren (180 Upm) auf 90 °C aufgeheizt, und bei Erreichen von 85 °C wurden 57 g einer 3,5 gew.-%igen wässrigen Natriumpersulfat-Lösung zugegeben. Nach 10 Minuten wurden zeitgleich beginnend die Gesamtmenge an Zulauf 1A und Zulauf 2 innerhalb von 270 Minuten und Zulauf 3 innerhalb von 300 Minuten kontinuierlich mit gleichbleibenden Mengenströmen zudosiert. Ebenso zeitgleich wurde der Zulauf 1 B gestartet, dabei wurde 40% der Menge dieses Zulaufs innerhalb der ersten 150 Minuten, nachfolgend 50% der Menge dieses Zulaufs innerhalb von 60 Minuten und nachfolgend 10% der Menge dieses Zulaufs innerhalb von 30 Minuten zudosiert. Über die gesamte Dosierzeit wurden die Mengenströme von Zulauf 1A, Zulauf 1 B und Zulauf 2 kurz vor dem Eintritt in den Reaktor über ein mechanisches Rührwerk (Blattrührer, 500 Upm) homogenisiert. Daran anschließend ließ man den Reaktorinhalt noch 1 Stunde bei 90 °C nachreagieren. Danach kühlte man den Reaktorinhalt auf Raumtemperatur ab und entspannte den Druckbehälter auf Atmosphärendruck. Das gebildete Koagulat wurde von der Dispersion durch Filtration über ein Sieb (Maschenweite 100 Mikrometer) abgetrennt.
Nachfolgend wurde mit 25 gew.-%igen wässriger Ammoniak-Lösung auf einen pH-Wert von 7,5 eingestellt.
Zulauf 1A
   homogene Mischung aus
   700 gentionisiertes Wasser
   63 g Disponil® FES 27 der Fa. Cognis (28 gew.-%ig)
   66 g Lutensol® AT 18 der Fa. BASF (20 gew.-%ig)
   314 geiner 7 gew.-%igen wässrigen Itakonsäure-lösung
Zulauf 1 B
   22 g einer 50 gew.-%igen wässrigen Acrylamid-Lösung
Zulauf 2
   homogene Mischung aus
   1408 g Styrol
   31 g tertiär-Dodecylmercaptan
   748 g Butadien
Zulauf 3
   258 g einer 3,5 gew.-%igen wässrigen Natriumpersulfat-Lösung

Die erhaltene wässrige Copolymerisatdispersion wies einen Feststoffgehalt von 49,4 Gew.-%, bezogen auf das Gesamtgewicht der wässrigen Dispersion, auf. Die Glasübergangstemperatur wurde zu 12,7 °C und die Teilchengröße zu 143 nm bestimmt. Die Wasseraufnahmewerte der Polymerfilme sind in Tabelle 1 wiedergegeben.

Die Feststoffgehalte wurden generell bestimmt, indem eine definierte Menge der jeweiligen wässrigen Copolymerisatdispersion (ca. 5 g) bei 140 °C in einem Trockenschrank bis zur Gewichtskonstanz getrocknet wurde. Es wurden jeweils zwei separate Messungen durchgeführt. Die in den Bespielen angegebenen Werte stellen den Mittelwert dieser beiden Messergebnisse dar.

Die Bestimmung der Glasübergangstemperatur erfolgte gemäß DIN 53765 mittels eines DSC820-Geräts, Serie TA8000 der Fa. Mettler-Toledo Int. Inc..

Die mittleren Teilchendurchmesser der Polymerteilchen wurde durch dynamische Lichtstreuung an einer 0,005 bis 0,01 gew.-%igen wässrigen Polymerdispersion bei 23 °C mittels eines Autosizer® IIC der Fa. Malvern Instruments, England, ermittelt. Angegeben wird der mittlere Durchmesser der Kumulantenauswertung (cumulant z-average) der gemessenen Autokorrelationsfunktion (ISO-Norm 13321).

Die Bestimmung der Wasseraufnahme der Polymerfilme erfolgte gemäß DIN EN ISO 62.

**Tabelle 1**

| Dispersion | VD | D1 | D2 |
|---|---|---|---|
| Dosierung | linear | in Stufen | in Stufen |
| Feststoffgehalt [%] | 48,4 | 50,7 | 49,4 |
| Glasübergangstemperatur [°C] | 14,3 | 14,1 | 12,7 |
| Teilchengröße [nm] | 143 | 141 | 143 |
| Wasseraufnahme [%] | 2,61 | 1,57 | 1,03 |

## Patentansprüche

1. Verfahren zum Schutz von metallischen Substraten gegen Korrosion, umfassend die Schritte
I) Herstellen eines Polymeren durch Emulsionspolymerisation, enthaltend als Aufbaukomponenten in einpolymerisierter Form
(A) mindestens eine vinylaromatische Verbindung,
(B) mindestens eine Verbindung mit zwei konjugierten ethylenisch ungesättigten Doppelbindungen,
(C) mindestens eine ethylenisch ungesättigte Verbindung ausgewählt aus der Gruppe bestehend aus Verbindungen mit mindestens einer Amidfunktion und Hydroxyalkyl(meth)acrylaten,
(D) optional mindestens eine andere Verbindung als die Verbindungen (A) und (C) mit einer ethylenisch ungesättigten Doppelbindung, und
(E) optional mindestens eine andere Verbindung als Verbindungen (B) mit mindestens zwei ethylenisch ungesättigten Doppelbindungen,
wobei zumindest ein Teil der Monomere während der Polymerisation über einen gewissen Zeitraum (Dosierungszeitraum) dem Reaktionsgemisch zudosiert werden,
und wobei in der ersten Hälfte des Dosierungszeitraums dem Reaktionsgemisch weniger als die Hälfte der Gesamtmenge des Monomers (C) zudosiert wird,
II) optional Vermischen des so erhaltenen Polymers mit mindestens einem Hilfsmittel ausgewählt aus der Gruppe bestehend aus Verlaufsmitteln, Verdickern, Entschäumern, Füllstoffen, Pigmenten, Dispergierhilfsmitteln für Pigmente, Korrosionsinhibatoren und aktiven Korrisionsschutzpigmenten,
III) Aufbringen der Beschichtungsmasse auf das metallische Substrat und
IV) Trocknen der Beschichtung bei einer Temperatur von Umgebungstemperatur bis 100 °C über einen Zeitraum von wenigem Minuten bis mehreren Tagen.

2. Verfahren gemäß Anspruch 1, **dadurch gekennzeichnet, daß** es sich bei dem Monomer (A) um Styrol handelt.

3. Verfahren gemäß einem der vorstehenden Ansprüche, **dadurch gekennzeichnet, daß** es sich bei dem Monomer (B) um 1,3-Butadien handelt.

4. Verfahren gemäß einem der vorstehenden Ansprüche, **dadurch gekennzeichnet, daß** es sich bei dem Monomer (C) um Acrylamid handelt.

5. Verfahren gemäß einem der Ansprüche 1 bis 3, **dadurch gekennzeichnet, daß** Monomer (C) ausgewählt aus der Gruppe bestehend aus N-Vinylformamid, N-Vinylacetamid, N-Vinylpyrrolidon und N-Vinylcaprolactam.

6. Verfahren gemäß einem der Ansprüche 1 bis 3, **dadurch gekennzeichnet, daß** Monomer (C) ausgewählt aus der Gruppe bestehend aus 2-Hydroxyethylacrylat, 2-Hydroxyethylmethacrylat, 2-Hydroxypropylacrylat, 2-Hydroxypropylmethacrylat, 3-Hydroxypropylacrylat, 3-Hydroxypropylmethacrylat, 4-Hydroxybutylacrylat und 4-Hydroxybutylmethacrylat.

7. Verfahren gemäß einem der vorstehenden Ansprüche, **dadurch gekennzeichnet, daß** die Zusammensetzung der Emulsionspolymerisate wie folgt ist
(A) 40 bis 80 Gew%,
(B) 20 bis 60 Gew%,
(C) 0,1 bis 10 Gew%,
(D) 0 bis 30 Gew%,
(E) 0 bis 5 Gew%,
mit der Maßgabe, daß die Summe immer 100 Gew% ist.

8. Verfahren gemäß einem der vorstehenden Ansprüche, **dadurch gekennzeichnet, daß** in der ersten Hälfte des Dosierungszeitraums dem Reaktionsgemisch nicht mehr als 45 Gew% der Gesamtmenge des Monomers (C) zudosiert wird.

9. Verfahren gemäß Anspruch 8, **dadurch gekennzeichnet, daß** in den letzten 5% des Dosierungszeitraums kein Monomer (C) mehr zudosiert wird.

10. Verfahren gemäß einem der vorstehenden Ansprüche, **dadurch gekennzeichnet, daß** das metallische Substrat ausgewählt ist aus der Gruppe bestehend aus Eisen, Stahl, Zink, Zink-Legierungen, Aluminium und AluminiumLegierungen.

11. Verfahren gemäß Anspruch 10, **dadurch gekennzeichnet, daß** die Oberfläche des metallischen Substrats unbeschichtet, mit Zink, Aluminium oder deren Legierungen überzogen, feuerverzinkt, galvanisch verzinkt, sherardisiert oder mit Primern vorbeschichtet ist.

12. Verwendung von Emulsionspolymerisaten gemäß Schritt I) aus Anspruch 1 zum Schutz von metallischen Substraten vor Korrosion.

## Claims

1. A process for protecting metallic substrates against corrosion, comprising the steps of
I) preparing by emulsion polymerization a polymer comprising as synthesis components in copolymerized form
(A) at least one vinylaromatic compound,
(B) at least one compound having two conjugated ethylenically unsaturated double bonds,
(C) at least one ethylenically unsaturated compound selected from the group consisting of compounds having at least one amide function and hydroxyalkyl (meth)acrylates,
(D) optionally at least one compound, other than the compounds (A) and (C), having an ethylenically unsaturated double bond, and
(E) optionally at least one compound, other than compounds (B), having at least two ethylenically unsaturated double bonds,
at least a portion of the monomers being metered into the reaction mixture during the polymerization over a certain time period (metering period),
and less than half the total amount of the monomer (C) being metered into the reaction mixture in the first half of the metering period,
II) optionally mixing the resultant polymer with at least one auxiliary selected from the group consisting of flow control agents, thickeners, defoamers, fillers, pigments, pigment dispersing assistants, corrosion inhibitors, and active anti-corrosion pigments,
III) applying the coating material to the metallic substrate, and
IV) drying the coating at a temperature from ambient temperature up to 100°C over a period from a few minutes up to several days.

2. The process according to claim 1, wherein monomer (A) is styrene.

3. The process according to either of the preceding claims, wherein monomer (B) is 1,3-butadiene.

4. The process according to any one of the preceding claims, wherein monomer (C) is acrylamide.

5. The process according to any one of claims 1 to 3, wherein monomer (C) is selected from the group consisting of N-vinylformamide, N-vinylacetamide, N-vinylpyrrolidone, and N-vinylcaprolactam.

6. The process according to any one of claims 1 to 3, wherein monomer (C) is selected from the group consisting of 2-hydroxyethyl acrylate, 2-hydroxyethyl methacrylate, 2-hydroxypropyl acrylate, 2-hydroxypropyl methacrylate, 3-hydroxypropyl acrylate, 3-hydroxypropyl methacrylate, 4-hydroxybutyl acrylate, and 4-hydroxybutyl methacrylate.

7. The process according to any one of the preceding claims, wherein the composition of the emulsion polymer is as follows:
(A) 40% to 80% by weight,
(B) 20% to 60% by weight,
(C) 0.1% to 10% by weight,
(D) 0% to 30% by weight,
(E) 0% to 5% by weight,
with the proviso that the sum is always 100% by weight.

8. The process according to any one of the preceding claims, wherein not more than 45% by weight of the total amount of the monomer (C) is metered into the reaction mixture in the first half of the metering period.

9. The process according to claim 8, wherein monomer (C) is no longer metered in in the last 5% of the metering period.

10. The process according to any one of the preceding claims, wherein the metallic substrate is selected from the group consisting of iron, steel, zinc, zinc alloys, aluminum, and aluminum alloys.

11. The process according to claim 10, wherein the surface of the metallic substrate is uncoated, covered with zinc, aluminum or alloys thereof, hot-dip galvanized, electrogalvanized, sherardized or precoated with primers.

12. The use of an emulsion polymer as per step I) from claim 1 to protect a metallic substrate from corrosion.

## Revendications

1. Procédé de protection de substrats métalliques contre la corrosion, comprenant les étapes suivantes :
I) la fabrication d'un polymère par polymérisation en émulsion, contenant en tant que composant constitutifs sous forme copolymérisée
(A) au moins un composé aromatique de vinyle,
(B) au moins un composé contenant deux doubles liaisons éthyléniquement insaturées conjuguées,
(C) au moins un composé éthyléniquement insaturé choisi dans le groupe constitué par les composés contenant au moins une fonction amide et les (méth)acrylates d'hydroxyalkyle,
(D) éventuellement au moins un autre composé que les composés (A) et (C) contenant une double liaison éthyléniquement insaturée, et
(E) éventuellement au moins un autre composé que les composés (B) contenant au moins deux doubles liaisons éthyléniquement insaturées,
au moins une partie des monomères étant ajoutée au mélange réactionnel pendant la polymérisation pendant une période déterminée (période d'ajout),
et moins de la moitié de la quantité totale du monomère (C) étant ajoutée au mélange réactionnel pendant la première moitié de la période d'ajout,
II) éventuellement le mélange du polymère ainsi obtenu avec au moins un adjuvant choisi dans le groupe constitué par les agents d'écoulement, les épaississants, les démoussants, les charges, les pigments, les adjuvants de dispersion pour pigments, les inhibiteurs de corrosion et les pigments anticorrosion actifs,
III) l'application de la matière de revêtement sur le substrat métallique et
IV) le séchage du revêtement à une température allant de la température ambiante à 100 °C pendant une période allant de quelques minutes à plusieurs jours.

2. Procédé selon la revendication 1, **caractérisé en ce que** le monomère (A) est le styrène.

3. Procédé selon l'une quelconque des revendications précédentes, **caractérisé en ce que** le monomère (B) est le 1,3-butadiène.

4. Procédé selon l'une quelconque des revendications précédentes, **caractérisé en ce que** le monomère (C) est l'acrylamide.

5. Procédé selon l'une quelconque des revendications 1 à 3, **caractérisé en ce que** le monomère (C) est choisi dans le groupe constitué par le N-vinylformamide, le N-vinylacétamide, la N-vinylpyrrolidone et le N-vinylcaprolactame.

6. Procédé selon l'une quelconque des revendications 1 à 3, **caractérisé en ce que** le monomère (C) est choisi dans le groupe constitué par l'acrylate de 2-hydroxyéthyle, le méthacrylate de 2-hydroxyéthyle, l'acrylate de 2-hydroxypropyle, le méthacrylate de 2-hydroxypropyle, l'acrylate de 3-hydroxypropyle, le méthacrylate de 3-hydroxypropyle, l'acrylate de 4-hydroxybutyle et le méthacrylate de 4-hydroxybutyle.

7. Procédé selon l'une quelconque des revendications précédentes, **caractérisé en ce que** la composition des polymères en émulsion est la suivante :
(A) 40 à 80 % en poids,
(B) 20 à 60 % en poids,
(C) 0,1 à 10 % en poids,
(D) 0 à 30 % en poids,
(E) 0 à 5 % en poids,
à condition que la somme soit toujours de 100 % en poids.

8. Procédé selon l'une quelconque des revendications précédentes, **caractérisé en ce que** pas plus de 45 % en poids de la quantité totale du monomère (C) est ajoutée au mélange réactionnel pendant la première moitié de la période d'ajout.

9. Procédé selon la revendication 8, **caractérisé en ce qu'**aucun monomère (C) n'est plus ajouté pendant les derniers 5 % de la période d'ajout.

10. Procédé selon l'une quelconque des revendications précédentes, **caractérisé en ce que** le substrat métallique est choisi dans le groupe constitué par le fer, l'acier, le zinc, les alliages de zinc, l'aluminium et les alliages d'aluminium.

11. Procédé selon la revendication 10, **caractérisé en ce que** la surface du substrat métallique est non revêtue, revêtue avec du zinc, de l'aluminium ou leurs alliages, zinguée à chaud, galvanisée, shérardisée ou prérevêtue avec des amorces.

12. Utilisation de polymères en émulsion selon l'étape I) de la revendication 1 pour la protection de substrats métalliques de la corrosion.
